# EUROPÄISCHE PATENTANMELDUNG

(11) **EP 4 169 370 A1**
(43) Veröffentlichungstag der Anmeldung: **26.04.2023**
(21) Anmeldenummer: 22199719.0
(22) Anmeldetag: 05.10.2022
(51) Int. Cl.: A01D 41/14, A01D 41/16

(54) **VORSATZGERÄT FÜR EINE LANDMASCHINE**

(30) Priorität: 22.10.2021 DE 102021127529
(71) Anmelder: Maschinenfabrik Bernard Krone GmbH & Co. KG, 48480 Spelle (DE)
(72) Erfinder: Ester, Markus, 49832 Beesten (DE)

(57) **Zusammenfassung**

Die Erfindung betrifft ein Vorsatzgerät (20) für eine Landmaschine (10), aufweisend einen Rahmen (21) sowie eine hiermit verbundene Vorsatz-Pendelführung (26), wobei in einer Arbeitskonfiguration des Vorsatzgeräts (20) die Vorsatz-Pendelführung (26) in einer Pendelstellung an einer an der Landmaschine (10) angeordneten Maschinen-Pendelführung (11) derart verschiebbar geführt ist, dass der Rahmen (21) bei einer senkrecht zu einer Pendelachse (A) verlaufenden Pendelbewegung gegenüber der Landmaschine (10) wenigstens anteilig über die Vorsatz-Pendelführung (26) auf der Maschinen-Pendelführung (11) abgestützt ist, und wobei das Vorsatzgerät (20) in eine Transportkonfiguration verstellbar ist, wozu der Rahmen (21) wenigstens teilweise entlang einer Querachse (Y) der Landmaschine (10) verschiebbar ist. Um eine Gewichtsoptimierung bei einem Vorsatzgerät zu ermöglichen, das sowohl zur Querkopierung eingerichtet als auch für den Straßentransport verstellbar ist, ist erfindungsgemäß vorgesehen, dass die Vorsatz-Pendelführung (26) in eine Verschiebestellung verstellbar ist, so dass sie wenigstens einen Teil einer mit dem Rahmen (21) verbundenen Querführung (34) bildet, über welche sich der Rahmen (21) beim Verschieben entlang der Querachse (Y) wenigstens anteilig auf der Maschinen-Pendelführung (11) abstützt.

## Beschreibung

Die vorliegende Erfindung betrifft ein Vorsatzgerät für eine Landmaschine, nach dem Oberbegriff von Anspruch 1, sowie eine Kombination aus einer Landmaschine und einem Vorsatzgerät, nach dem Oberbegriff von Anspruch 14.

In der Landwirtschaft werden zur Bearbeitung eines Feldes unterschiedliche Maschinen eingesetzt. Hierzu zählen z.B. selbstfahrende Maschinen, die einen eigenen Fahrantrieb aufweisen sowie eine integrierte Vorrichtung zur Feldbearbeitung, oder gezogene Maschinen, die keinen eigenen Fahrantrieb aufweisen, sondern von einem Traktor bzw. Schlepper gezogen werden. Außerdem existieren Vorsatz- bzw. Anbaugeräte, die für einen bestimmten Einsatz an eine Landmaschine wie einen Traktor, ein Feldhäcksler, einen Mähdrescher oder dergleichen angekoppelt werden, wobei die Landmaschine das Vorsatzgerät wenigstens teilweise, ggf. auch vollständig stützt bzw. trägt. D.h. das Vorsatzgerät kann im Einsatz vollständig durch die Landmaschine getragen werden oder es kann teilweise auf einem eigenen Fahrwerk ruhen. Beispiele solcher Vorsatzgeräte sind Schneid- bzw. Mähwerke oder Aufnahmevorrichtungen (Pick-ups).

Da der Boden eines zu bearbeitenden Feldes in den seltensten Fällen völlig eben ist, ist es vorteilhaft, wenn das Vorsatzgerät eine gewisse Schwenkbarkeit gegenüber der Landmaschine aufweist, um eine sogenannte Bodenkopierung zu erlauben. Innerhalb gewisser Grenzen kann die Ausrichtung des Vorsatzgeräts unabhängig von der Ausrichtung der Landmaschine an das Bodenprofil angepasst werden. Grundsätzlich können 2 Arten von Schwenkbarkeit vorgesehen sein, nämlich ein Längskopieren, bei welchem das Vorsatzgerät um die Fahrzeugquerachse schwenkt, sowie einen Querkopieren, bei welchem das Vorsatzgerät um die Fahrzeuglängsachse schwenkt. Insbesondere Letzteres ist in der Regel bei Vorsatzgeräten deren Arbeitsbreite die Breite der Landmaschine deutlich übertrifft. Das Vorsatzgerät kann dabei teilweise auf einem eigenen (Tast-)Fahrwerk oder Gleitkufen ruhen und gegenüber der Landmaschine frei schwenkbar sein, so dass die Kopierung gewissermaßen passiv erfolgt. Daneben sind auch Systeme bekannt, bei denen das Vorsatzgerät gegenüber der Landmaschine aktorisch schwenkbar ist, wobei über Sensoren das Bodenprofil bzw. die Bodenfreiheit im Bereich des Vorsatzgeräts überprüft und das Schwenken hiermit gesteuert wird, d. h. die Kopierung erfolgt in diesem Falle aktiv.

Viele Vorsatzgeräte sind aufgrund ihrer Breite in angekoppeltem Zustand nicht für den Straßenverkehr zugelassen. In diesem Fall ist es möglich, das Vorsatzgerät abzukoppeln und bspw. auf einem separaten Transportwagen zu transportieren. Alternativ zum Einsatz eines Transportwagens können manche Vorsatzgeräte auch für die Straßenfahrt an der Landmaschine verbleiben, wobei allerdings wenigstens Teile des Vorsatzgeräts in eine speziellen Position verstellt werden müssen. Ein bekanntes Funktionsprinzip sieht vor, dass das Vorsatzgerät eine erstes Vorsatzteil aufweist, das in Richtung der Querachse der Landmaschine verstellt werden kann, sowie ein hiermit um die Längsachse der Landmaschine schwenkbar verbundenes zweites Vorsatzteil. Für die Feldarbeit ist das Vorsatzgerät in einer Arbeitskonfiguration angeordnet, in der die Vorsatzteil in Richtung der Querachse nebeneinander angeordnet sind und sich normalerweise jedes Vorsatzteil über ungefähr die Hälfte der Gesamtbreite des Vorsatzgeräts erstreckt. Für den Transport wird das zweite Vorsatzteil um einen Winkel von bspw. 150° bis 180° aufwärts geschwenkt, bis es über dem ersten Vorsatzteil angeordnet ist. Anschließend oder währenddessen wird das erste Vorsatzteil zusammen mit dem zweiten Vorsatzteil zur Fahrzeugmittelebene hin verstellt, bis es wenigstens annähernd symmetrisch zu dieser angeordnet ist. Ein solcher Mechanismus ist bspw. in der DE 43 22 018 C1 oder der DE 195 24 823 C1 beschrieben. Nachteilig ist hierbei, dass sich der Aufbau des Vorsatzgeräts verkompliziert, wenn zusätzlich eine Aufhängung integriert wird, die eine Querkopierung erlaubt. Im Stand der Technik sind dabei beide Vorsatzteile normalerweise an einem Zwischenrahmen angeordnet, der seinerseits pendelnd an der Landmaschine aufgehängt ist. Hierdurch verkompliziert sich der Aufbau des Vorsatzgeräts und das Gewicht desselben erhöht sich, was wiederum die Achslast der Erntemaschine nachteilig beeinflusst.

Aufgabe der Erfindung ist es, eine Gewichtsoptimierung bei einem Vorsatzgerät zu ermöglichen, das sowohl zur Querkopierung eingerichtet als auch für den Straßentransport verstellbar ist.

Die Aufgabe wird gelöst mit einem Vorsatzgerät mit den Merkmalen des unabhängigen Patentanspruchs 1. Vorteilhafte Ausführungsformen sind den abhängigen Ansprüchen entnehmbar.

Dafür wird ein Vorsatzgerät für eine Landmaschine geschaffen, aufweisend einen Rahmen sowie eine hiermit verbundene Vorsatz-Pendelführung, wobei in einer Arbeitskonfiguration des Vorsatzgeräts die Vorsatz-Pendelführung in einer Pendelstellung an einer an der Landmaschine angeordneten Maschinen-Pendelführung derart verschiebbar geführt ist, dass der Rahmen bei einer senkrecht zu einer Pendelachse verlaufenden Pendelbewegung gegenüber der Landmaschine wenigstens anteilig über die Vorsatz-Pendelführung auf der Maschinen-Pendelführung abgestützt ist, und wobei das Vorsatzgerät in eine Transportkonfiguration verstellbar ist, wozu der Rahmen wenigstens teilweise entlang einer Querachse der Landmaschine verschiebbar ist.

Der Begriff "Landmaschine" ist in diesem Zusammenhang nicht einschränkend auszulegen und bezeichnet jede Maschine, die in der Landwirtschaft eingesetzt werden kann, z.B. einen Traktor oder Schlepper, eine Mähmaschine, ein Feldhäcksler etc. Das Vorsatzgerät ist dazu eingerichtet, mit der Landmaschine gekoppelt bzw. verbunden zu werden. In angekoppeltem Zustand wird das Vorsatzgerät wenigstens teilweise von der Landmaschine gestützt bzw. getragen, d.h. die Landmaschine trägt das Gewicht des Vorsatzgeräts wenigstens teilweise, ggf. auch vollständig. Die Kopplung an die Landmaschine ist zum einen statisch-mechanischer Art, zum anderen kann aber auch eine Kopplung zur Energie- bzw. Kraftübertragung in mechanischer, elektrischer, pneumatischer und/oder hydraulischer Form hergestellt werden. Bei dem Vorsatzgerät kann es sich z.B. um ein Direktschneidwerk, eine Pick-up, einen Maisvorsatz, ein Getreideschneidwerk oder dergleichen handeln. Das Vorsatzgerät ist zur Feldbearbeitung eingerichtet, z.B. zum Mähen, Häckseln, Ernten, Säen etc., wobei hier begrifflich nicht zwischen "Feld" und "Acker" unterschieden wird. Es weist einen Rahmen auf, an dem in aller Regel ein oder mehrere Teile beweglich gelagert sind, bspw. Messer eines Schneidwerks oder Häckslers, Zinken einer Pick-up oder dergleichen. Der Rahmen verleiht dem Vorsatzgerät die notwendige mechanische Stabilität und kann ggf. auch die bewegliche Teile nach außen mechanisch abschirmen.

Eine Vorsatz-Pendelführung ist mit dem Rahmen verbunden und ist in einer Pendelstellung an einer an der Landmaschine angeordneten Maschinen-Pendelführung verschiebbar geführt, wenn sich das Vorsatzgerät in einer Arbeitskonfiguration befindet, in welcher es an die Landmaschine angekoppelt ist. Die Arbeitskonfiguration entspricht derjenigen Konfiguration, in welcher sich das Vorsatzgerät bestimmungsgemäß während der Feldbearbeitung befindet. In der genannten Pendelstellung ist die Vorsatz-Pendelführung so auf die Maschinen-Pendelführung abgestimmt, dass sie sich gegenüber der Maschinen-Pendelführung verschiebbar ist, wobei durch den Kontakt der beiden Pendelführungen eine geführte Verschiebung möglich ist. Die Maschinen-Pendelführung ist in der Arbeitskonfiguration an der Landmaschine angeordnet. Dabei ist es möglich, dass es sich um eine Maschinen-Pendelführung der Landmaschine handelt, die permanent mit dieser verbunden ist und insofern als Teil derselben angesehen werden kann. Alternativ kann auch vorgesehen sein, dass die Maschinen-Pendelführung bedarfsweise an der Landmaschine angeordnet bzw. mit dieser verbunden und auch wieder von dieser abgenommen bzw. gelöst werden kann. In letzterem Fall kann die Maschinen-Pendelführung dem Vorsatzgerät zugeordnet sein oder auch als Teil desselben angesehen werden, d.h. das Vorsatzgerät kann die Maschinen-Pendelführung aufweisen, welche an der Landmaschine anordenbar (bzw. mit dieser verbindbar) ist. Die Vorsatz-Pendelführung kann insbesondere schienenartig ausgebildet sein und dazu eingerichtet sein, an der Maschinen-Pendelführung entlangzulaufen. Durch die verschiebbare Führung ist eine senkrecht zu einer Pendelachse verlaufende Pendelbewegung des Rahmens gegenüber der Landmaschine möglich, bei welcher er wenigstens anteilig über die Vorsatz-Pendelführung auf der Maschinen-Pendelführung abgestützt ist. Der Rahmen kann sich also über die mit ihm verbundene Vorsatz-Pendelführung an der Maschinen-Pendelführung abstützen, während er die genannte Pendelbewegung ausführt. Man könnte auch sagen, dass die Pendelbewegung des Rahmens wenigstens teilweise durch das Zusammenwirken von Vorsatz-Pendelführung und Maschinen-Pendelführung geführt ist. Das Abstützen ist wenigstens anteilig, d. h. wenigstens einen Teil der Gewichtskraft des Rahmens wird über die Vorsatz-Pendelführung und die Maschinen-Pendelführung in die Landmaschine eingeleitet, bevorzugt ein überwiegender Teil, z.B. über 50% oder über 70%. Es können auch bis zu 100% sein.

Die Pendelbewegung besteht wenigstens anteilig aus einer rotatorischen Schwenkbewegung um die genannte Pendelachse, wenngleich es im Rahmen der Erfindung nicht ausgeschlossen ist, dass die rotatorische Bewegung von einer translatorischen Bewegung überlagert wird. Die Pendelachse läuft normalerweise in Richtung der Längsachse der Landmaschine. Die Pendelbewegung dient zur Querkopierung, also dazu, dem Vorsatzgerät zu ermöglichen, sich einem unebenen Bodenprofil quer zur Fahrtrichtung der Landmaschine anzupassen. Normalerweise kann die Pendelbewegung auf einen Winkel von bspw. maximal 10° (oder noch weniger, z.B. 8° oder 6°) zu jeder Seite beschränkt sein, was zur Anpassung an üblicherweise auftretende Bodenunebenheiten ausreichend ist. Im Rahmen der Erfindung kann die Querkopierung passiv erfolgen, wobei sich der Rahmen über ein (Tast)fahrwerk oder Gleitkufen am Boden abstützt und die Pendelbewegung im Wesentlichen frei gegenüber der Landmaschine ausführen kann. Alternativ kann auch eine aktive Querkopierung erfolgen, bei welcher der Abstand des Rahmens zum Boden bzw. das Bodenprofil mittels Sensoren überwacht wird und die Pendelbewegung des Rahmens aktorisch gesteuert wird.

Das Vorsatzgerät ist in eine Transportkonfiguration verstellbar, wozu der Rahmen wenigstens teilweise entlang einer Querachse der Landmaschine verschiebbar ist. Die Transportkonfiguration ist dazu vorgesehen, bspw. bei einer Straßenfahrt eingenommen zu werden, also allgemein dann, wenn das Vorsatzgerät nicht arbeitet, sondern durch die Landmaschine transportiert wird. Hierzu kann das Vorsatzgerät gegenüber der Arbeitskonfiguration verstellt werden, wozu der Rahmen wenigstens teilweise verschiebbar ist. Normalerweise erfolgt das Verschieben durch einen Seitenantrieb. Dieser weist wenigstens einen Aktor auf, der bspw. elektrisch, hydraulisch, elektrohydraulisch oder pneumatisch ausgebildet sein kann. Je nach Masse bzw. Gewicht des Vorsatzgeräts und der notwendigen Kräfte ist auch ein manuelles Verschieben denkbar. Insgesamt erfolgt eine Bewegung des Rahmens oder eines Teils desselben entlang der Querachse. Dabei beziehen sich Angaben hinsichtlich des Vorsatzgeräts, die Bezug auf Längs-, Quer- oder Hochachse der Landmaschine nehmen, hier und im Folgenden stets auf den bestimmungsgemäß an die Landmaschine angekoppelten Zustand des Vorsatzgeräts. Die Bewegung kann dabei auch (normalerweise geringer) Anteile in Richtung der Längsachse und/oder Hochachse umfassen, normalerweise erfolgt sie aber zumindest überwiegend parallel zur Querachse. Der Begriff "verschieben" ist selbstverständlich nicht einschränkend dahingehend auszulegen, dass eine Schubkraft ausgeübt werden muss, es kann ebenso eine Zugkraft sein.

Erfindungsgemäß ist die Vorsatz-Pendelführung in eine Verschiebestellung verstellbar, so dass sie wenigstens einen Teil einer mit dem Rahmen verbundenen Querführung bildet, über welche sich der Rahmen beim Verschieben entlang der Querachse wenigstens anteilig auf der Maschinen-Pendelführung abstützt. Die Querführung erfüllt beim Verschieben entlang der Querachse eine ähnliche Funktion wie die Vorsatz-Pendelführung bei der Pendelbewegung. Während letztere jedoch ganz oder überwiegend eine rotatorische Bewegung ist, ist erstere ganz oder überwiegend eine translatorischen Bewegung. Dementsprechend muss die Querführung eine andere Ausrichtung aufweisen, damit sich der Rahmen im Zuge der seitlichen Bewegung mittels der Querführung an der Maschinen-Pendelführung abstützen kann. Man könnte auch sagen, dass die seitliche Verschiebung des Rahmens wenigstens teilweise durch das Zusammenwirken von Querführung und Maschinen-Pendelführung geführt ist. Die Querführung kann zusätzlich zur Vorsatz-Pendelführung noch durch weitere Elemente gebildet sein, prinzipiell wäre es aber auch möglich, dass die Vorsatz-Pendelführung nach ihrer Verstellung in die Verschiebestellung vollständig die Querführung bildet.

Das erfindungsgemäße Vorsatzgerät ermöglicht eine doppelte Nutzung der auf Seiten der Landmaschine vorhandenen Maschinen-Pendelführung. Diese wird zum einen in der Arbeitskonfiguration genutzt, um den Rahmen bei seiner Pendelbewegung zu stützen, zum anderen wird sie beim Verstellen in die Transportkonfiguration genutzt, um den Rahmen beim seitlichen Verschieben zu stützen. Dabei ist eine Führung des Rahmens durch das Zusammenwirken der Maschinen-Pendelführung einerseits mit der Vorsatz-Pendelführung bzw. der Querführung andererseits möglich. Da die Vorsatz-Pendelführung wenigstens einen Teil der Querführung bildet, wird auch sie doppelt genutzt. Durch die geschilderte Doppelnutzung können die Anzahl der notwendigen Bauteile sowie das Gewicht des Vorsatzgeräts verringert werden. Letzteres bedeutet wiederum, dass die Achslast auf Seiten der Landmaschine verringert wird.

Bevorzugt weist der Rahmen ein erstes Rahmenteil auf sowie ein hiermit verbundenes zweites Rahmenteil, welches um eine Klappachse schwenkbar mit dem ersten Rahmenteil verbunden ist, wobei das erste Rahmenteil entlang der Querachse verschiebbar ist. Dabei kann vorgesehen sein, dass das Verschieben des ersten Rahmenteils vor, nach und/oder zeitgleich mit dem Schwenken des zweiten Rahmenteils erfolgt. Die beiden Rahmenteile können in etwa gleich groß sein. Die Klappachse kann parallel zur Längsachse der Landmaschine verlaufen, so dass die Schwenkbewegung des zweiten Rahmenteils gegenüber dem ersten Rahmenteil in der Querebene (Y-Z-Ebene) verläuft, sie könnte aber auch gegenüber der Längsachse in Richtung auf die Querachse und/oder auf die Hochachse geneigt sein. Durch die Schwenkbewegung wird das zweite Rahmenteil normalerweise aufwärts geschwenkt und kann schließlich oberhalb des ersten Rahmenteils zur Anlage kommen. Ein oben erwähnter Seitenantrieb kann direkt oder indirekt am ersten Rahmenteil angreifen und dieses - zusammen mit dem zweiten Rahmenteil - seitwärts verfahren. Der Verschiebeweg kann in etwa der Hälfte der Breite des ersten Rahmenteils entsprechen, so dass die Masse des Rahmens nach dem Verschieben und dem Klappen wenigstens annähernd symmetrisch zur Längsmittelebene angeordnet ist. Wenngleich hier nur von den beiden Rahmenteilen die Rede ist, sind bewegliche Teile normalerweise entweder dem ersten Rahmenteil oder dem zweiten Rahmenteil zugeordnet und werden zusammen mit dem jeweiligen Rahmenteil verschwenkt und/oder verschoben. Bspw. könnte das Vorsatzgerät eine drehbare Walze oder Förderschnecke aufweisen, die am Rahmen angeordnet ist und ebenfalls aus zwei Teilen besteht, von denen eines zusammen mit dem zweiten Rahmenteil geschwenkt wird.

Bevorzugt ist die Vorsatz-Pendelführung für eine Maschinen-Pendelführung vorgesehen, die zwei entlang der Querachse zueinander beabstandete Pendelrollen aufweist, die um Pendelrollenachsen drehbar gelagert sind. Wie bereits erläutert, kann die Maschinen-Pendelführung auch Teil des Vorsatzgeräts sein. In diesem Fall kann man auch davon sprechen, dass das Vorsatzgerät eine Maschinen-Pendelführung aufweist, die zwei in der Arbeitskonfiguration entlang der Querachse zueinander beabstandete Pendelrollen aufweist, die um Pendelrollenachsen drehbar gelagert sind. Dabei können die Pendelrollen drehbar an einem Hilfsrahmen gelagert sein, der zum Ankoppeln des Vorsatzgeräts an der Landmaschine befestigt wird. Alternativ kann die Landmaschine eine solche Maschinen-Pendelführung aufweisen, wobei die Pendelrollen drehbar an der Landmaschine bzw. an einem Rahmen, Chassis oder ähnlichem Element der Landmaschine gelagert sind. In beiden Fällen sind die Pendelrollenachsen (wenigstens bei angekoppeltem Vorsatzgerät, also insbesondere in der Arbeitskonfiguration) in aller Regel bezüglich der Landmaschine stationär. Die beiden Pendelrollen sind typischerweise symmetrisch zur Mittellängsebene der Landmaschine angeordnet. Die jeweilige Pendelrollenachse verläuft normalerweise parallel zur Längsachse der Landmaschine. In angekoppeltem Zustand liegt die Vorsatz-Pendelführung auf den Pendelrollen auf und die Pendelbewegung basiert auf einer Drehbewegung der Pendelrollen, d. h. zwischen der Maschinen-Pendelführung und der Vorsatz-Pendelführung tritt lediglich Rollreibung auf. An der Vorsatz-Pendelführung kann ein Profil ausgebildet sein, das an ein Profil der Pendelrollen angepasst ist bzw. umgekehrt. Die Pendelrollen können als Pendelstützelemente bezeichnet werden, wobei statt drehbar gelagert Pendelrollen auch Pendelstützelemente denkbar wären, die stationär an der Landmaschine angeordnet sind und an denen die Vorsatz-Pendelführung entlang gleitet. Diese Lösung ist allerdings mit erhöhter Reibung und Verschleiß verbunden bzw. erfordert eine wartungstechnisch aufwändige Schmierung im Bereich der Kontaktfläche.

Vorteilhaft weist die Vorsatz-Pendelführung zwei entlang der Querachse zueinander versetzte Pendelschienen auf, von denen jede um eine Schienenschwenkachse zwischen der Pendelstellung und der Verschiebestellung schwenkbar ist. Sie sind bezüglich der Querachse zumindest zueinander versetzt und können insbesondere diesbezüglich beabstandet sein. Jede der Pendelschienen kann dabei einem der o.g. Pendelstützelemente bzw. einer Pendelrollen zugeordnet sein, also in der Arbeitskonfiguration auf dieser aufliegen. Es versteht sich, dass jede Pendelschiene um eine eigene Schienenschwenkachse schwenkbar ist. Jede der Schienenschwenkachsen verläuft bevorzugt parallel zur Längsachse, könnte allerdings auch in Richtung auf die Hochachse und/oder die Querachse geneigt sein, bspw. um einen Winkel von weniger als 30° oder weniger als 20°. Sofern der Rahmen wie oben beschrieben zwei Rahmenteile aufweist, ist bevorzugt jeweils eine Pendelschiene einem Rahmenteil zugeordnet. Die Pendelschienen sind bevorzugt durch einen Schwenkantrieb schwenkbar.

Besonders bevorzugt ist in der Arbeitskonfiguration jede Schienenschwenkachse fluchtend mit einer Pendelrollenachse anordenbar. In Bezug auf Achsen werden die Begriffe "fluchtend" und "deckungsgleich" hier als gleichwertig angesehen, da man die Achsen im mathematisch-geometrischen Sinn als unendlich lang ansehen kann. Da die Schienenschwenkachsen zusammen mit dem Rahmen die Pendelbewegung ausführen können, verändert sich ihre Position gegenüber der Landmaschine. Die genannte Anordnung, in welcher sie fluchtend bzw. deckungsgleich mit jeweils einer Pendelrollenachse angeordnet sind, entspricht normalerweise dem Zustand, in dem das Vorsatzgerät waagerecht zur Landmaschine ausgerichtet ist (also bspw. bei ebenem Untergrund). Beim Schwenken zwischen der Pendelstellung und der Verschiebestellung bewegt sich die jeweilige Pendelschiene also um die Pendelrollenachse, d.h. die Abstände sämtlicher Teile der Pendelschiene zur Pendelrollenachse bleiben gleich. Die Pendelrolle kann sich bspw. mit der Pendelschiene mitdrehen und es tritt minimaler Widerstand auf. Insbesondere ist jedoch vorteilhaft, dass bei dieser Anordnung die Pendelschienen in gleichmäßigen Kontakt mit den Pendelrollen bleiben können, ohne dass eine Verlagerung des Rahmens gegenüber den Pendelrollen bzw. der Landmaschine insgesamt notwendig ist. D.h. der Rahmen kann stationär gehalten werden.

Um dem Rahmen eine reine Schwenk- bzw. Rotationsbewegung um die Pendelachse zu ermöglichen, ist es bevorzugt, dass jede Pendelschiene einen kreisbogenförmig ausgebildeten Bogenabschnitt aufweist, der in der Arbeitskonfiguration zur Pendelachse zentriert ist. D. h. die Kontur des Bogenabschnitts, die mit der Pendelrollen zusammenwirkt, entspricht einem Abschnitt eines Kreises, dessen Mittelpunkt auf der Pendelachse liegt. Somit kann sich der Bogenabschnitt in gleichbleibendem Kontakt mit der Pendelrolle und in gleichbleibenden Abstand zur Pendelachse bewegen. Es versteht sich, dass der jeweilige Bogenabschnitt in der Verschiebestellung normalerweise nicht zur Pendelachse zentriert ist.

Während die Bogenform für die Pendelbewegung in der Pendelstellung optimal ist, ist sie in der Verschiebestellung eher kontraproduktiv. Alternativ oder normalerweise zusätzlich zu einem Bogenabschnitt kann daher jede Pendelschiene wenigstens einen gerade ausgebildeten Geradenabschnitt aufweisen, der in der Pendelstellung gegenüber der Waagerechten geneigt ist und in der Verschiebestellung waagerecht ausgerichtet ist. Der Geradenabschnitt kann sich mittelbar oder unmittelbar an den Bogenabschnitt anschließen, er könnte aber auch ohne einen Bogenabschnitt vorhanden sein. Es können auch beiderseits des Bogenabschnitts geraden Abschnitte ausgebildet sein. Der jeweilige geraden Abschnitt hat in der Arbeitskonfiguration keine Funktion, in der Verschiebestellung hingegen bildet er eine waagerechte Führung, für den Rahmen, der entlang der Querachse verschoben wird.

Bevorzugt weist die Querführung eine stationär am Rahmen angeordnete seitliche Querschiene auf, an die sich eine Pendelschiene in der Verschiebestellung entlang der Querachse anschließt. Die seitliche Querschiene ist starr mit dem Rahmen verbunden, d.h. nicht verstellbar. Sie ist normalerweise gerade ausgebildet und verläuft parallel zur Querachse. In der Verschiebestellung schließt sich eine Pendelschiene an die seitliche Querschiene an, d. h. zwischen diesen beiden ist nur ein vernachlässigbarer Zwischenraum gegeben, so dass eine Pendelrolle beim seitlichen Verschieben des Rahmens praktisch übergangslos zunächst entlang der Pendelschiene und dann entlang der seitlichen Querschiene geführt ist. Um die Position der Pendelschiene in der Verschiebestellung zu stabilisieren, könnte sie auch einen Formschluss mit der seitlichen Querschiene bilden, sich somit gewissermaßen an dieser abstützen. Durch das Vorhandensein der seitlichen Querschiene kann der Rahmen weit verschoben werden, ohne auf ganzer Strecke von der Pendelschiene gestützt werden zu müssen. Letzteres kann mit zunehmendem Abstand der Krafteinwirkung von der Schienenschwenkachse problematisch werden.

Es ist möglich, dass sich die beiden Pendelschienen in der Verschiebestellung ohne nennenswerten Zwischenraum aneinander anschließen, wobei sie bspw. einander zugewandte Geradenabschnitte aufweisen können. Je nach Abstand der beiden Schienenschwenkachsen kann dies allerdings bedeuten, dass bei einer Krafteinleitung im Übergangsbereich zwischen den beiden Pendelschienen erhebliche Drehmomente einwirken, was problematisch sein kann. Eine Ausgestaltung der Erfindung sieht daher vor, dass die Querführung wenigstens eine stationär am Rahmen angeordnete mittlere Querschiene aufweist, wobei sich beide Pendelschienen in der Verschiebestellung entlang der Querachse an die zwischen ihnen angeordnete wenigstens eine mittlere Querschiene anschließen. Die wenigstens eine mittlere Querschiene dient dazu, in der Verschiebestellung den Zwischenraum zwischen den Pendelschiene zu überbrücken. U.U. reicht eine mittlere Querschiene aus, es kann allerdings auch eine Zweiteilung nötig sein, wobei jeweils eine mittlere Querschiene einem Rahmenteil zugeordnet und an diesem befestigt ist. Vorteilhaft schließen sich die beiden mittleren Querschienen entlang der Querachse ohne nennenswerten Zwischenraum aneinander an.

Wenngleich die Maschinen-Pendelführung das Vorsatzgerät an der Landmaschine abstützt, so dass dessen Gewichtskraft wenigstens überwiegend aufgenommen ist, ist normalerweise eine zusätzliche Anbindung des Vorsatzgeräts an die Landmaschine notwendig, um ein störungsfreies Pendeln zu gewährleisten. Vorteilhaft kann das Vorsatzgerät daher ein Kopplungselement zur Kopplung an ein um die Pendelachse schwenkbares Pendelelement der Landmaschine aufweisen. Das Pendelelement, welches z.B. auch als Pendelrohr ausgebildet sein kann, ist schwenkbar an der Landmaschine angeordnet. Das Kopplungselement ist dazu ausgebildet, an das Pendelelement gekoppelt zu werden, wobei die Kopplung nicht starr sein muss. Tatsächlich ist es u.U. vorteilhaft, wenn die entsprechende Verbindung wenigstens einen Freiheitsgrad aufweist, also Spiel zwischen dem Kopplungselement und dem Pendelelement gegeben ist. Hierdurch kann z.B. ausgeglichen werden, dass sich der Rahmen beim seitlichen Verschieben geringfügig vertikal verschiebt, da die Bogenabschnitte auch in der Verschiebestellung kein gerades, waagerechtes Führungsprofil repräsentieren. Insgesamt bildet das Pendelelement eine Ankopplung für das Kopplungselement, welche die Pendelbewegung des Rahmens erlaubt, allerdings keine größeren Verschiebungen zwischen Pendelelement und Kopplungselement zulässt.

Vorteilhaft ist der o.g. Seitenantrieb dazu ausgebildet, eine Kraft zwischen dem ersten Rahmenteil und dem Kopplungselement auszuüben, um den Rahmen entlang der Querachse zu verfahren. Somit kann der Seitenantrieb über das Kopplungselement und das Pendelelement eine Kraft in die Landmaschine einleiten bzw. sich an dieser abstützen, während er das erste Rahmenteil verfährt. Der Seitenantrieb kann als Linearantrieb (z.B. als elektrischer, pneumatischer oder insbesondere hydraulischer Zylinder) einerseits mit dem ersten Rahmenteil verbunden sein und andererseits mit dem Kopplungselement. Beim Verschieben des ersten Rahmenteils verbleibt das Kopplungselement an das Pendelelement gekoppelt und - abgesehen von dem o.g. Spiel - stationär mit diesem verbunden.

Das Zusammenwirken der Maschinen-Pendelführung mit der Querführung sorgt bereits für eine geführte Bewegung des Rahmens bzw. Rahmenteils beim seitlichen Verschieben. Im Allgemeinen ist allerdings eine zusätzliche Führung notwendig. Gemäß einer bevorzugten Ausführungsform ist daher ein erstes Führungselement stationär am Kopplungselement angeordnet und am ersten Rahmenteil ist ein zweites Führungselement ausgebildet, welches entlang der Querachse verschiebbar am zweiten Führungselement geführt ist. Das erste und zweite Führungselement bilden insgesamt eine (Linear-)Führung entlang der Querachse. Die beiden Führungselemente können aneinander entlanggleiten, wobei ihre Querschnitte aneinander angepasst sind. Bspw. könnte das erste Führungselement einen rechteckigen Querschnitt aufweisen, während das zweite Führungselement nach Art eines U-Profils ausgebildet ist, innerhalb dessen das erste Führungselement aufgenommen werden kann. Zumindest in einigen Ausführungsformen kann das erste Führungselement auch als Teil des Kopplungselements angesehen werden. Alternativ zu einer gleitenden Führung könnte auch vorgesehen sein, dass eines der Führungselemente wenigstens eine Rolle aufweist, so dass bei einer Relativverschiebung lediglich Rollreibung auftritt.

Wie bereits oben erwähnt, kann jeweils eine Schienenschwenkachse deckungsgleich mit einer Pendelrollenachse sein. Gemäß einer anderen Ausgestaltung ist in der Arbeitskonfiguration jede Schienenschwenkachse versetzt zu den Pendelrollenachsen angeordnet, wobei der Rahmen dazu ausgebildet ist, relativ zu den Pendelrollen vertikal verlagert zu werden, wenn die Pendelschienen zwischen der Pendelstellung und der Verschiebestellung verstellt werden. Da die Schienenschwenkachse zur Pendelrollenachse versetzt ist (z.B. in Richtung der Querachse), kann die Pendelschiene nicht durch eine reine Rotation um die Pendelrollenachse verstellt werden. Zusätzlich ist allgemein eine vertikale Verlagerung des Rahmens gegenüber den Pendelrollen bzw. der Landmaschine notwendig. Dabei kann der Rahmen z.B. mittels der Pendelschienen, die sich auf den Pendelrollen abstützen, aktiv aufwärts gedrückt werden. D.h. der Schwenkantrieb der Pendelschienen muss ein Drehmoment aufbringen, das ausreichend ist, den Rahmen entsprechend anzuheben. Alternativ könnte auch ein vom Schwenkantrieb unabhängiger Höhenantrieb vorgesehen sein, um den Rahmen vertikal zu verschieben. Sofern wie oben beschrieben ein Kopplungselement mit einem Pendelelement gekoppelt ist, muss die entsprechende Verbindung einen Freiheitsgrad aufweisen, der die Verlagerung des Rahmens ermöglicht. Z.B. könnte eine Verbindung über Sicherungsstifte gegeben sein, die auf Seiten des Kopplungselements in Langlöchern geführt sind, entlang derer sie sich verschieben können, wenn der Rahmen vertikal verlagert wird.

Die Aufgabe wird weiterhin gelöst mit einer Kombination aus einer Landmaschine und einem Vorsatzgerät, mit den Merkmalen des unabhängigen Anspruchs 15. Das Vorsatzgerät weist einen Rahmen auf sowie eine hiermit verbundene Vorsatz-Pendelführung, wobei in einer Arbeitskonfiguration des Vorsatzgeräts die Vorsatz-Pendelführung in einer Pendelstellung an einer an der Landmaschine angeordneten Maschinen-Pendelführung derart verschiebbar geführt ist, dass der Rahmen bei einer senkrecht zu einer Pendelachse verlaufenden Pendelbewegung gegenüber der Landmaschine wenigstens anteilig über die Vorsatz-Pendelführung auf der Maschinen-Pendelführung abgestützt ist, und wobei das Vorsatzgerät in eine Transportkonfiguration verstellbar ist, wozu der Rahmen wenigstens teilweise entlang einer Querachse der Landmaschine verschiebbar ist.

Erfindungsgemäß ist die Vorsatz-Pendelführung in eine Verschiebestellung verstellbar, so dass sie wenigstens einen Teil einer mit dem Rahmen verbundenen Querführung bildet, über welche sich der Rahmen beim Verschieben entlang der Querachse wenigstens anteilig auf der Maschinen-Pendelführung abstützt.

Die genannten Begriffe wurden bereits mit Bezug auf das erfindungsgemäße Vorsatzgerät erläutert und werden daher nicht nochmals erklärt. Bevorzugte Ausgestaltungen der erfindungsgemäßen Kombination entsprechen denen des erfindungsgemäßen Vorsatzgeräts. Gemäß einer Ausgestaltung weist die Landmaschine die Maschinen-Pendelführung auf, Letztere ist also ein Teil der Landmaschine. Alternativ kann das Vorsatzgerät die Maschinen-Pendelführung aufweisen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Darstellung einer Landmaschine mit einem Vorsatzgerät gemäß einer ersten Ausführungsform in einer Arbeitskonfiguration mit einer Vorsatz-Pendelführung in einer Pendelstellung;
- Fig. 2: eine vergrößerte Detailansicht von Fig. 1;
- Fig. 3: eine perspektivische Darstellung entsprechend Fig. 1 mit der Vorsatz-Pendelführung in einer Verschiebestellung;
- Fig. 4 und 5: perspektivische Darstellungen des Vorsatzgeräts aus Fig.1 mit der Vorsatz-Pendelführung in der Verschiebestellung;
- Fig. 6: eine perspektivische Darstellung entsprechend Fig. 1 mit dem Vorsatzgerät in einer Transportkonfiguration; sowie
- Fig. 7: eine perspektivische Darstellung eines Vorsatzgeräts gemäß einer zweiten Ausführungsform mit einer Vorsatz-Pendelführung in einer Pendelstellung;

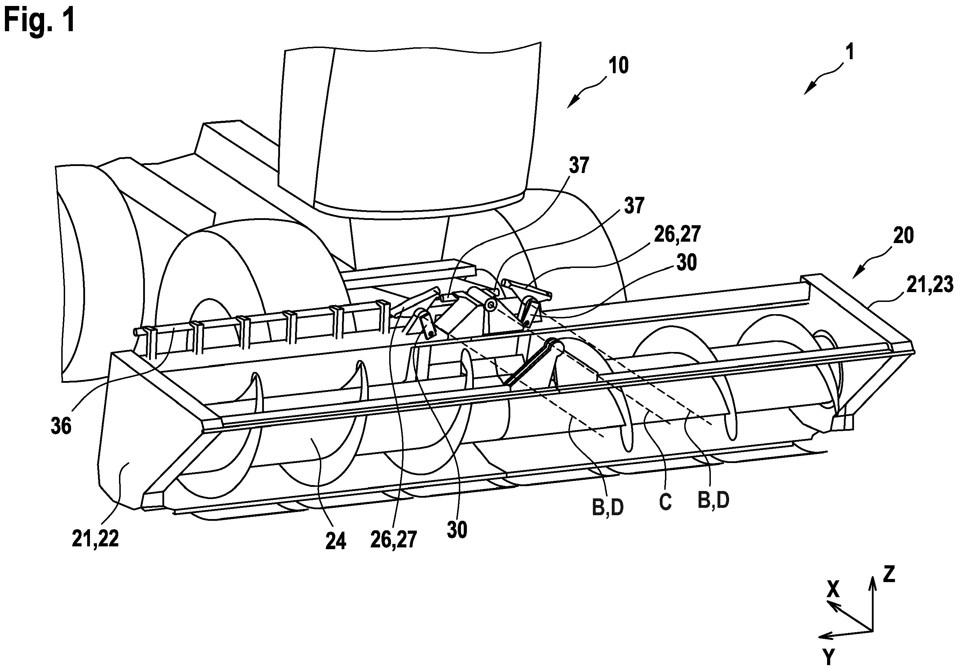

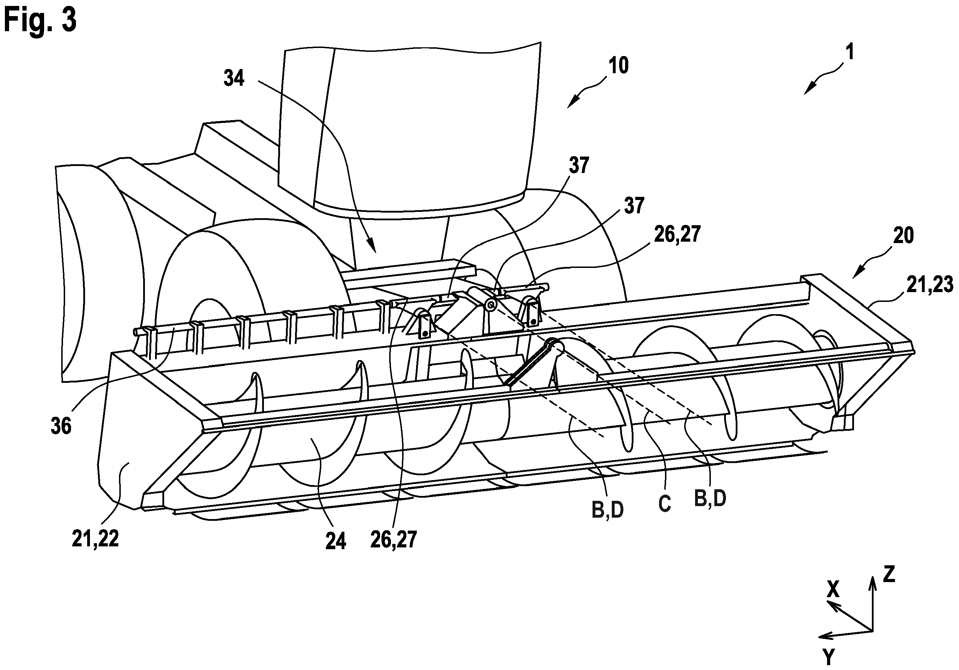

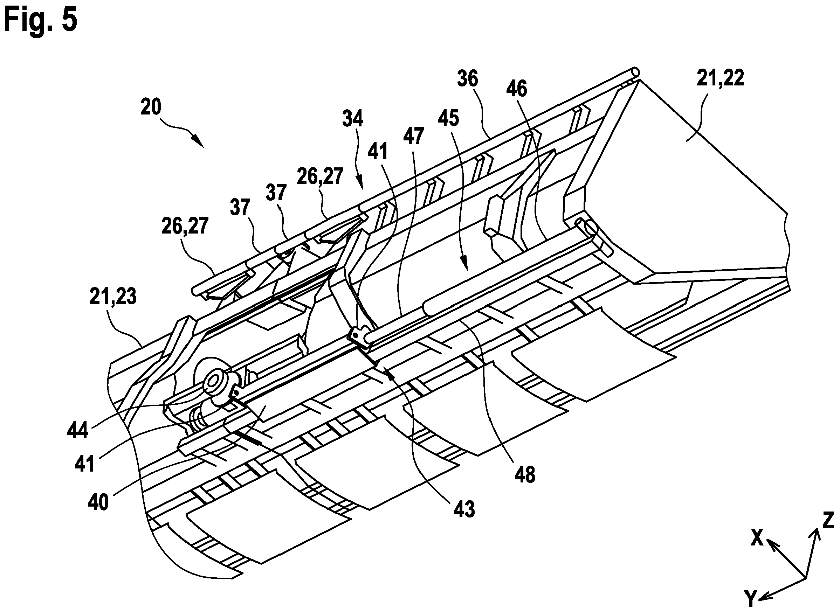

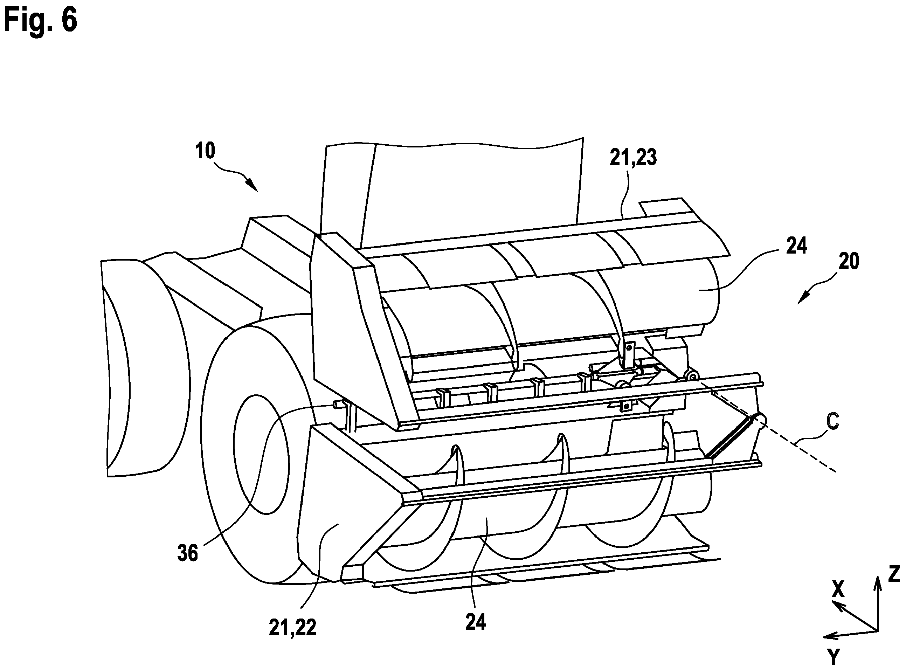

Fig. 1 - 3 zeigen eine Kombination 1 aus einer Landmaschine 10, in diesem Fall einem Feldhäcksler, sowie einem Vorsatzgerät 20, gemäß einer ersten Ausführungsform der Erfindung. Fig. 5 und 6 zeigen das Vorsatzgerät 20 einzeln. In den Figuren sind jeweils die Längsachse X, die Querachse Y sowie die Hochachse Z der Landmaschine 10 eingezeichnet. Das Vorsatzgerät 20, welches in den Figuren stark vereinfacht dargestellt ist, weist einen Rahmen 21 mit einem ersten Rahmenteil 22 und einem zweiten Rahmenteil 23 auf, an dem eine Zuführschnecke 24 drehbar gelagert ist. Die beiden Rahmenteile 22, 23 sind um eine Klappachse C schwenkbar miteinander verbunden. Eine Vorsatz-Pendelführung 26 ist mit dem Rahmen 21 verbunden. Genauer gesagt ist jeweils eine Pendelschiene 27 der Vorsatz-Pendelführung 26 um eine Schienenschwenkachse D schwenkbar mit einem der Rahmenteile 22, 23 verbunden. Eine seitliche Querschiene 36 ist in Richtung der Querachse außenseitig der Pendelschiene 27 starr mit dem ersten Rahmenteil 22 verbunden. Außerdem sind 2 mittlere Querschienen 37 zwischen den Pendelschiene 27 angeordnet, wobei jeweils eine mittlere Querschiene 37 starr mit einem der Rahmenteile 22, 23 verbunden ist.

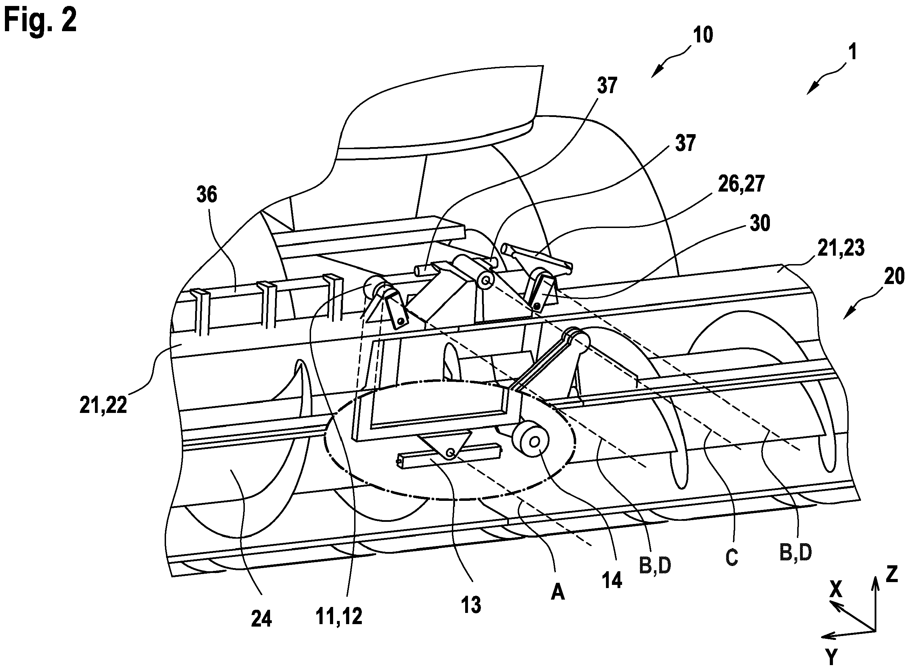

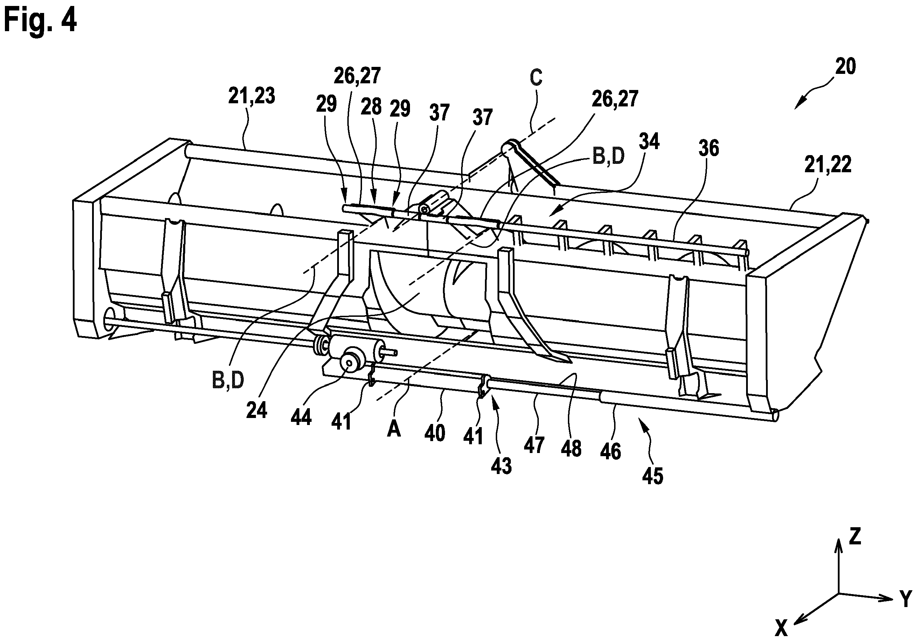

In der in Fig. 1 und 2 dargestellten Pendelstellung der Vorsatz-Pendelführung 26 ist der Rahmen 21 über jeweils eine Pendelschiene 27 an einer von zwei Pendelrollen 12 abgestützt. Eine der Pendelrollen 12 ist in der vergrößerten Darstellung in Fig. 2 erkennbar, in welcher Teile des Vorsatzgeräts 20 weggelassen wurden, um die dahinter liegenden Teile der Landmaschine 10 sichtbar zu machen. Die Pendelrollen 12 bilden eine Maschinen-Pendelführung 11 und sind um jeweils eine Pendelrollenachse B drehbar. Wenn sich das Vorsatzgerät 20 in der Arbeitskonfiguration befindet und der Rahmen wie in Fig. 1 und 2 waagerecht ausgerichtet ist, fluchtet jeweils eine Schienenschwenkachse D mit einer Pendelrollenachse B bzw. ist mit dieser deckungsgleich. Über die Pendelschienen 27 sowie die Pendelrollen 12 wird der überwiegende Teil der vertikalen Kräfte seitens des Vorsatzgeräts 20 in die Landmaschine 10 eingeleitet. Wie in Fig. 4 erkennbar ist, weist das Vorsatzgerät 20 ein Kopplungselement 40 auf, welches hier auch als Verschiebekonsole bezeichnet werden kann. Das Kopplungselement 40 ist dazu vorgesehen, an ein als Pendelrohr ausgebildetes Pendelelement 13 der Landmaschine 10 angekoppelt zu werden, wobei Wangen 41 des Kopplungselements 40 beiderseits des Pendelelements 13 angeordnet sind und eine Verschiebung in Richtung der Querachse Y verhindern. Durch die Verbindung des Kopplungselements 40 mit dem Pendelelement 13 werden im Wesentlichen die horizontal zwischen Vorsatzgerät 20 und Landmaschine 10 wirkenden Kräfte übertragen.

Jede Wange 41 weist eine Durchgangsöffnung auf, durch die ein formschlüssiges Verbindungsmittel (ein Bolzen oder dergleichen) geführt werden kann, wodurch größere Verschiebungen gegenüber dem Pendelelement 13 entlang der Hochachse Z verhindert werden. Allerdings ist in dieser Richtung ein gewisses Spiel gegeben. Das Pendelelement 13 ist um eine parallel zur Längsachse X verlaufende Pendelachse A schwenkbar gelagert. Dies ermöglicht auch dem Kopplungselement 40 sowie dem Vorsatzgerät 20 insgesamt eine Pendelbewegung um die Pendelachse A. Dabei weist jede Pendelschiene 26 einen Bogenabschnitt 28 auf, der in der Pendelstellung mit der zugehörigen Pendelrolle 12 zusammenwirkt. Beide Bogenabschnitte 28 sind in der Pendelstellung zur Pendelachse A zentriert, d.h. sie liegen auf einem Kreis um die genannte Pendelachse A. Beiderseits des Bogenabschnitts 28 weist jede Pendelschiene 27 jeweils einen Geradenabschnitt 29 auf, der allerdings im Zuge der Pendelbewegung, welche bspw. lediglich einer Schwenkbewegung maximal 10° zu jeder Seite (oder auch weniger, z.B. maximal 8° oder maximal 6°) entspricht, nicht in Kontakt mit der jeweiligen Pendelrolle 12 kommt.

Die Landmaschine 10 weist eine Klauenkupplung 14 auf, die mit einer entsprechenden Klauenkupplung 44 eingreift, um z.B. eine Antriebskraft für den Antrieb der Zuführschnecke 24 zu übertragen. Am Kopplungselement 40 ist als erstes Führungselement ein in diesem Fall U-förmiges Führungsprofil 43 ausgebildet, das mit einer Führungsstange 48 eingreift, die ein zweites Führungselement bildet und stationär mit dem ersten Rahmenteil 22 verbunden ist. Außerdem greift ein Kolben 47 eines Seitenantriebs 45 am Kopplungselement 40 an, während ein zugehöriger Zylinder 46 mit dem ersten Rahmenteil 22 verbunden ist. Der Seitenantrieb 45 kann bspw. als hydraulischer Zylinder ausgebildet sein, es sind allerdings auch andere Antriebsarten denkbar.

Wenn sich das Vorsatzgerät 20 in der Arbeitskonfiguration befindet und die Pendelschienen 27 in der Pendelstellung sind, kann das Vorsatzgerät 20 die beschriebene Pendelbewegung zur Querkopierung durchführen. Allerdings ist das Vorsatzgerät 20 in diesem Zustand zu breit für eine Straßenfahrt. Für diese muss es in die in Fig. 6 dargestellte Transportkonfiguration verstellt werden. Hierzu werden zunächst beide Pendelschienen 27 um ihre jeweilige Schienenschwenkachsen D in entgegengesetzter Richtung geschwenkt, wobei die Schwenkbewegung bspw. über hier nicht dargestellte Linearaktoren eingeleitet werden kann, die an Schwenkhebeln 30 ansetzen, die mit den Pendelschiene 27 verbunden sind. Die Pendelschienen 27 werden geschwenkt, bis die Geradenabschnitte 29 parallel zur Querachse Y ausgerichtet sind und die Pendelschienen 27 ohne wesentlichen Zwischenraum an die seitliche Querschiene 36 sowie an die mittleren Querschienen 37 anschließen. Da die jeweilige Schienenschwenkachse D mit der Pendelrollenachse B zusammenfällt, können die Pendelschienen 27 Kontakt zu den Pendelrollen 12 halten, ohne dass eine vertikale Verlagerung des Rahmens 21 nötig ist. In diesem Zustand bilden die genannten Schienen 27, 36, 37 insgesamt eine Querführung 34.

In einem nächsten Schritt wird durch den Seitenantrieb 45 eine Zugkraft zwischen dem ersten Rahmenteil 22 und dem Kopplungselement 40 ausgeübt, wodurch der Rahmen 21 insgesamt entlang der Querachse Y verschoben wird. Er ist dabei einerseits durch das Zusammenwirken des Führungsprofil 43 mit der Führungsstange 48 geführt sowie andererseits durch das Zusammenwirken der Pendelrollen 12 mit der Querführung 34. Letztere überträgt dabei den wesentlichen Teil der vertikal wirkenden Kräfte. Aufgrund der Bogenabschnitte 28 verläuft das Profil der Querführung 34 nicht durchgehend gerade und parallel zur Querachse Y, allerdings ist die Abweichung geringfügig und kann durch das oben erwähnte Spiel zwischen Kopplungselement 40 und Pendelelement 13 ausgeglichen werden. Zeitlich parallel oder nach dem seitlichen Verschieben des Rahmens 21 wird das zweite Rahmenteil 23 (mittels eines hier nicht dargestellten Antriebs) um die Klappachse C aufwärts geschwenkt, bis es schließlich oberhalb des ersten Rahmenteils 22 aufliegt, wie in Fig. 6 dargestellt. Die Zuführschnecke 24 ist wie der Rahmen 21 zweigeteilt, wobei ein Teil zusammen mit dem zweiten Rahmenteil 23 geschwenkt wird.

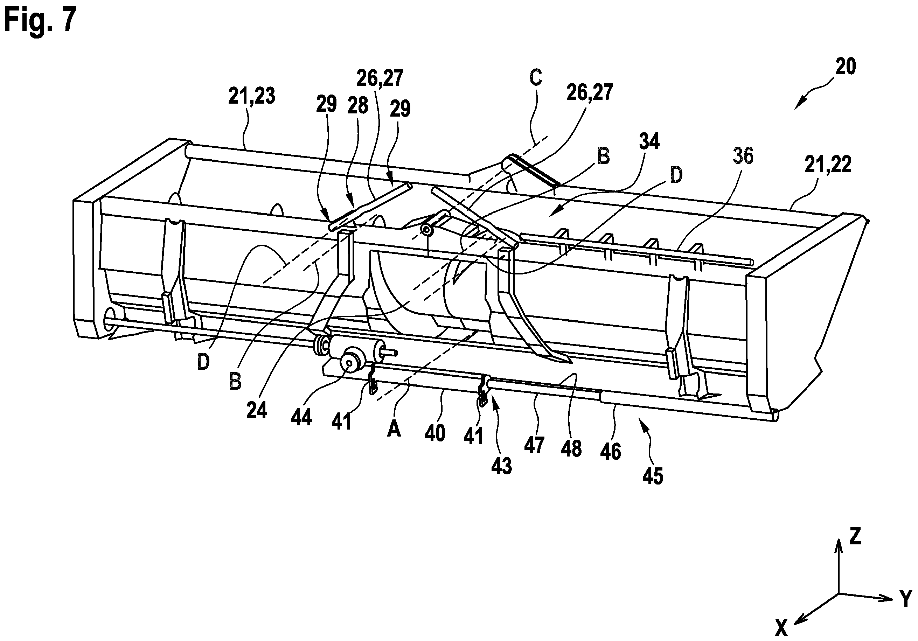

Fig. 7 zeigt eine zweite Ausführungsform eines erfindungsgemäßen Vorsatzgeräts 20, das weitgehend mit der ersten Ausführungsform identisch ist und insofern nicht nochmals erläutert wird. Dargestellt ist dabei eine Pendelstellung der Vorsatz-Pendelführung 26. Allerdings sind in diesem Fall keine mittleren Querschienen vorgesehen. Stattdessen sind die Pendelschienen 27 so weit verlängert, dass sie in der (nicht dargestellten) Verschiebestellung unmittelbar aneinander angrenzen. Ein weiterer Unterschied besteht darin, dass in diesem Fall die Schienenschwenkachsen D nicht mit den Pendelrollenachsen B zusammenfallen. Daher ist ein Schwenken der Pendelschienen 27 in die Verschiebestellung nur möglich, wenn der Rahmen 21 währenddessen vertikal verlagert wird. Die notwendige Hubkraft wird da bei über den Antrieb erzeugt, der die Pendelschienen 27 verstellt. Wie in Fig. 7 angedeutet, sind die Wangen 41 in vertikaler Richtung verlängert und die darin ausgebildeten Durchgangsöffnungen als Langlöcher ausgebildet, wodurch sich das Kopplungselement 40 zusammen mit dem Rahmen 21 vertikal gegenüber dem Pendelelement 13 verschieben kann.

In den hier gezeigten Ausführungsbeispielen bildet die Maschinen-Pendelführung 11 jeweils einen Teil der Landmaschine 10, ist also in diese integriert. Gemäß einer nicht dargestellten Alternative könnte die Maschinen-Pendelführung 11 allerdings auch derart ausgebildet sein, dass sie wahlweise mit der Landmaschine 10 verbindbar oder von dieser abnehmbar ist. Z.B. könnten die Pendelrollen 12 an einem Hilfsrahmen drehbar gelagert sein, wobei der Hilfsrahmen mit der Landmaschine 10 verbunden werden kann. Dabei können der Hilfsrahmen und die Pendelrollen 12 Teil des Vorsatzgeräts 20 sein, d.h. das Vorsatzgerät 20 kann die Maschinen-Pendelführung 11 aufweisen.

## Patentansprüche

1. Vorsatzgerät (20) für eine Landmaschine (10), aufweisend einen Rahmen (21) sowie eine hiermit verbundene Vorsatz-Pendelführung (26), wobei in einer Arbeitskonfiguration des Vorsatzgeräts (20) die Vorsatz-Pendelführung (26) in einer Pendelstellung an einer an der Landmaschine (10) angeordneten Maschinen-Pendelführung (11) derart verschiebbar geführt ist, dass der Rahmen (21) bei einer senkrecht zu einer Pendelachse (A) verlaufenden Pendelbewegung gegenüber der Landmaschine (10) wenigstens anteilig über die Vorsatz-Pendelführung (26) auf der Maschinen-Pendelführung (11) abgestützt ist, und wobei das Vorsatzgerät (20) in eine Transportkonfiguration verstellbar ist, wozu der Rahmen (21) wenigstens teilweise entlang einer Querachse (Y) der Landmaschine (10) verschiebbar ist,
**dadurch gekennzeichnet, dass**
die Vorsatz-Pendelführung (26) in eine Verschiebestellung verstellbar ist, so dass sie wenigstens einen Teil einer mit dem Rahmen (21) verbundenen Querführung (34) bildet, über welche sich der Rahmen (21) beim Verschieben entlang der Querachse (Y) wenigstens anteilig auf der Maschinen-Pendelführung (11) abstützt.

2. Vorsatzgerät nach Anspruch 1, **dadurch gekennzeichnet, dass** der Rahmen (21) ein erstes Rahmenteil (22) aufweist sowie ein hiermit verbundenes zweites Rahmenteil (23), welches um eine Klappachse (C) schwenkbar mit dem ersten Rahmenteil (21) verbunden ist, wobei das erste Rahmenteil (22) entlang der Querachse (Y) verschiebbar ist.

3. Vorsatzgerät nach einem der vorangehenden Ansprüche, **dadurch gekennzeichnet, dass** die Vorsatz-Pendelführung (26) für eine Maschinen-Pendelführung (11) vorgesehen ist, die zwei entlang der Querachse (Y) beabstandete Pendelrollen (12) aufweist, die um Pendelrollenachsen (B) drehbar gelagert sind.

4. Vorsatzgerät nach einem der vorangehenden Ansprüche, **dadurch gekennzeichnet, dass** die Vorsatz-Pendelführung (26) zwei entlang der Querachse (Y) zueinander versetzte Pendelschienen (27) aufweist, von denen jede um eine Schienenschwenkachse (D) zwischen der Pendelstellung und der Verschiebestellung schwenkbar ist.

5. Vorsatzgerät nach einem der vorangehenden Ansprüche, **dadurch gekennzeichnet, dass** in der Arbeitskonfiguration jede Schienenschwenkachse (D) fluchtend mit einer Pendelrollenachse (B) anordenbar ist.

6. Vorsatzgerät nach einem der vorangehenden Ansprüche, **dadurch gekennzeichnet, dass** jede Pendelschiene (27) einen kreisbogenförmig ausgebildeten Bogenabschnitt (28) aufweist, der in der Arbeitskonfiguration zur Pendelachse (A) zentriert ist.

7. Vorsatzgerät nach einem der vorangehenden Ansprüche, **dadurch gekennzeichnet, dass** jede Pendelschiene (27) wenigstens einen gerade ausgebildeten Geradenabschnitt (29) aufweist, der in der Pendelstellung gegenüber der Waagerechten geneigt ist und in der Verschiebestellung waagerecht ausgerichtet ist.

8. Vorsatzgerät nach einem der vorangehenden Ansprüche, **dadurch gekennzeichnet, dass** die Querführung (34) eine stationär am Rahmen (21) angeordnete seitliche Querschiene (36) aufweist, an die sich eine Pendelschiene (27) in der Verschiebestellung entlang der Querachse (Y) anschließt.

9. Vorsatzgerät nach einem der vorangehenden Ansprüche, **dadurch gekennzeichnet, dass** die Querführung (34) wenigstens eine stationär am Rahmen (21) angeordnete mittlere Querschiene (37) aufweist, wobei sich beide Pendelschienen (27) in der Verschiebestellung entlang der Querachse (Y) an die zwischen ihnen angeordnete wenigstens eine mittlere Querschiene (37) anschließen.

10. Vorsatzgerät nach einem der vorangehenden Ansprüche, **dadurch gekennzeichnet, dass** dieses ein Kopplungselement (40) zur Kopplung an ein um die Pendelachse (A) schwenkbares Pendelelement (13) der Landmaschine (10) aufweist.

11. Vorsatzgerät nach einem der vorangehenden Ansprüche, **dadurch gekennzeichnet, dass** ein Seitenantrieb (45) dazu ausgebildet ist, eine Kraft zwischen dem ersten Rahmenteil (22) und dem Kopplungselement (40) auszuüben, um den Rahmen (21) entlang der Querachse (Y) zu Verschieben.

12. Vorsatzgerät nach einem der vorangehenden Ansprüche, **dadurch gekennzeichnet, dass** ein erstes Führungselement (43) stationär am Kopplungselement (40) angeordnet ist und am ersten Rahmenteil (22) ein zweites Führungselement (48) ausgebildet ist, welches entlang der Querachse (Y) verschiebbar am ersten Führungselement (43) geführt ist.

13. Vorsatzgerät nach einem der vorangehenden Ansprüche, **dadurch gekennzeichnet, dass** in der Arbeitskonfiguration jede Schienenschwenkachse (C) versetzt zu den Pendelrollenachsen (D) angeordnet ist, wobei der Rahmen (21) dazu ausgebildet ist, relativ zu den Pendelrollen (12) vertikal verlagert zu werden, wenn die Pendelschienen (27) in die Verschiebestellung verstellt werden.

14. Kombination (1) aus einer Landmaschine (10) und einem Vorsatzgerät (20), aufweisend einen Rahmen (21) sowie eine hiermit verbundene Vorsatz-Pendelführung (26), wobei in einer Arbeitskonfiguration des Vorsatzgeräts (20) die Vorsatz-Pendelführung (26) in einer Pendelstellung an einer an der Landmaschine (10) angeordneten Maschinen-Pendelführung (11) derart verschiebbar geführt ist, dass der Rahmen (21) bei einer senkrecht zu einer Pendelachse (A) verlaufenden Pendelbewegung gegenüber der Landmaschine (10) wenigstens anteilig über die Vorsatz-Pendelführung (26) auf der Maschinen-Pendelführung (11) abgestützt ist, und wobei das Vorsatzgerät (20) in eine Transportkonfiguration verstellbar ist, wozu der Rahmen (21) wenigstens teilweise entlang einer Querachse (Y) der Landmaschine (10) verschiebbar ist,
**dadurch gekennzeichnet, dass**
die Vorsatz-Pendelführung (26) in eine Verschiebestellung verstellbar ist, so dass sie wenigstens einen Teil einer mit dem Rahmen (21) verbundenen Querführung (34) bildet, über welche sich der Rahmen (21) beim Verschieben entlang der Querachse (Y) wenigstens anteilig auf der Maschinen-Pendelführung (11) abstützt.

15. Kombination nach Anspruch 14, **dadurch gekennzeichnet, dass** die Landmaschine (10) die Maschinen-Pendelführung (11) aufweist.
